(19) **Europäisches Patentamt**
**European Patent Office**
**Office européen des brevets**

(11) **EP 0 643 651 B1**

(12) **EUROPÄISCHE PATENTSCHRIFT**

(45) Veröffentlichungstag und Bekanntmachung des Hinweises auf die Patenterteilung:
**27.12.1996 Patentblatt 1996/52**

(51) Int. Cl.[6]: **B60T 8/26**, B60T 8/32, B60T 13/66

(21) Anmeldenummer: **94911058.9**

(22) Anmeldetag: **22.03.1994**

(86) Internationale Anmeldenummer:
**PCT/DE94/00315**

(87) Internationale Veröffentlichungsnummer:
**WO 94/23975 (27.10.1994 Gazette 1994/24)**

(54) **FAHRZEUGBREMSANLAGE**

VEHICLE BRAKE SYSTEM

SYSTEME DE FREINAGE POUR VEHICULES

(84) Benannte Vertragsstaaten:
**DE FR GB SE**

(30) Priorität: **08.04.1993 DE 4311673**

(43) Veröffentlichungstag der Anmeldung:
**22.03.1995 Patentblatt 1995/12**

(73) Patentinhaber: **ROBERT BOSCH GMBH**
**70442 Stuttgart (DE)**

(72) Erfinder: **WREDE, Jürgen**
**D-70378 Stuttgart (DE)**

(56) Entgegenhaltungen:
**EP-A- 0 189 082**          **FR-A- 2 351 830**
**FR-A- 2 544 268**          **FR-A- 2 591 978**

**Beschreibung**

Stand der Technik

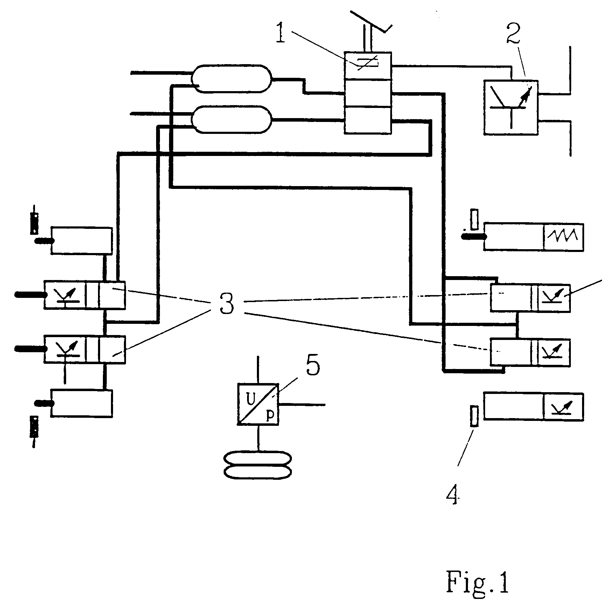

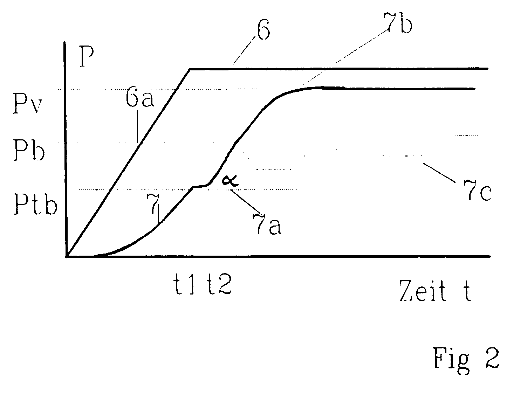

Figur 1 zeigt eine aus SAE Technical Paper 92 24 89 Nov. '92 bekannte Anlage. Die dickeren Linien stellen Druckmittelleitungen dar während die dünneren Linien elektrische Leitungen darstellen. Ein Bremswertgeber ist mit 1 bezeichnet. Er gibt ein seiner Betätigung entsprechendes Signal an ein Steuergerät 2, das Ansteuersignale für den Rädern zugeordnete Bremsdruckstellglieder 3 erzeugt. An dem Fahrzeug ist ein Lastwertgeber 5 angeordnet, der ein der Last entsprechendes Signal an das Steuergerät 2 liefert. Es sind noch Geschwindigkeitssensoren 4 vorgesehen, die Teil eines ABS sein können. Figur 2 zeigt ein Diagramm, in dem die Kurve für die Betätigung des Bremswertgebers mit 6 bezeichnet ist. Die Begrenzung ab Punkt 6a zeigt, daß der Bremswertgeber ab diesem Zeitpunkt voll betätigt ist. Das Steuergerät 2 ist nun derart aufgebaut, daß es den Bremsdruck in den Radzylindern bis zum Zeitpunkt $t_1$ entsprechend dem Verlauf 7 einregelt. Es ist unterstellt, daß das Fahrzeug nur teilbeladen ist. Deshalb wird der Bremsdruck auf den dieser Teillast entsprechenden Wert $P_{TB}$ begrenzt (gestrichelte Linie 7a).

Aus Kostengründen wird oft nur ein Lastgeber an der Hinterachse eingesetzt. Die Achslast an der Vorderachse wird aus diesem Hinterachslastsignal unter bestimmten Annahmen bezüglich Lage und Höhe des Fahrzeug-Schwerpunktes bzw. seiner Veränderung über der Last berechnet. Diese Annahmen treffen oft in der Praxis nicht zu, was zu einer nicht optimalen Bremsdruckverteilung führt. Auch können andere Einflüsse wie Meßfehler des Lastgebers, Hysterese z.B. in Blattfedern etc. zu einer "falschen" Bremsdruckverteilung führen. Ein weiterer, extremer Fall ist ein ausgefallener oder gestörter Lastgeber, der bei beladenem Fahrzeug minimale Beladung anzeigt.

In allen diesen Fällen kann es vorkommen, daß das Fahrzeug bei einer Vollbremsung, d.h. der Bremswertgeber 1 ist voll betätigt, nicht die maximal mögliche Verzögerung erreicht, die aufgrund des Reibwertes Reifen/Fahrbahn und der installierten Bremskraft möglich wäre.

Im Falle des "leer" anzeigenden Lastgebers bei beladenem Fahrzeug würde dies zu einem erheblich längeren Bremsweg führen.

Aus der FR-A 2 591 978 (Ausführungsform gemäß Figuren 2, 4 und 5) ist eine Fahrzeugbremsanlage mit den Merkmalen des Oberbegriffes des Anspruchs 1 bekannt, bei der ein vom Ausgangssignal eines Bremswertgebers abhängiger Bremsdruck an den Bremsen eingesteuert wird und bei der der eingesteuerte Bremsdruck zusätzlich von der Last des Fahrzeugs abhängig gemacht ist, derart, daß der Bremsdruck in Abhängigkeit von der Last auf einen Teilbremsdruck begrenzt wird. Ferner wird bei Betätigen des Bremswertgebers über ein vorgegebenes Maß hinaus durch Betätigen eines Notventils ein Sonderregelungsbetrieb eingeleitet, bei dem auf rein pneumatischen Wege eine weitere Bremsdruckerhöhung über die Begrenzung hinaus erfolgt.

Bei dieser Bremsanlage ist nachteilig, daß im Sonderregelungsbetrieb der maximale pneumatische Druck ungeregelt eingesteuert wird, mit der Folge, daß bei nicht oder nur teilbeladenen Fahrzeug die Räder weit in die Blockierung geraten.

Eine Verbesserung der Abbremsung des Fahrzeugs wird somit nicht in jedem Betriebszustand erreicht.

Es ist die Aufgabe der Erfindung, die Nachteile der gattungsbildenden Fahrzeugbremsanlage gemäß der FR-A 2 591 978 zu beseitigen.

Dies wird durch die Merkmale des unabhängigen Patentanspruchs erreicht.

Figurenbeschreibung

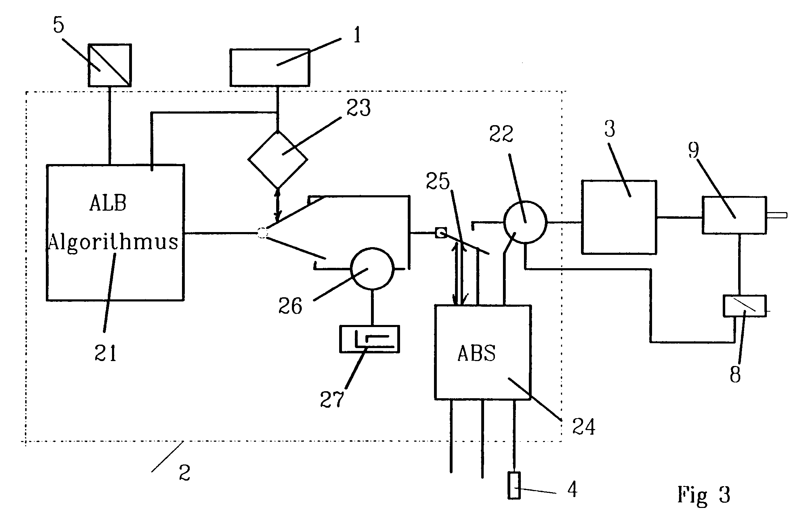

Anhand der Figuren 2 und 3 wird ein Ausführungsbeispiel der Erfindung näher erläutert.

Mit 2 ist in Figur 3 wieder das Steuergerät bezeichnet, dem das Signal des Bremswertgebers 1, des Last-Gebers 5 und der Drehzahlsensoren 4 zugeführt werden. Der Block 21 des Meßwertgebers erzeugt ein dem Sollbremsdruck bei der gegebenen Last entsprechendes Signal $P_{STB}$, z.B. das Signal $P_{TB}$ der Figur 2. Ein Regelkreis bestehend aus einem Drucksensor 8 an der Radbremse $(P_{ist})$, einem Vergleicher 22 $(P_{STB} - P_{ist} = \Delta P)$ und einem Stellglied 3 steuert den entsprechenden Druck im Radbremszylinder 9 ein.

Ein Überwachungsblock 23 überprüft, ob der Bremsdruckgeber 1 über ein vorgegebenes Maß (z.B. 80% des Vollausschlags) hinaus betätigt ist. Ist dies der Fall, so wird auf einen Sonderregelungsbetrieb umgeschaltet (als gestrichelte Schalterstellung dargestellt). Wie in Figur 2 dargestellt, kann der Sonderregelungsbetrieb verzögert $(t_2 - t_1)$ einsetzen, wozu im Überwachungsblock 23 ein Verzögerungszeitglied enthalten ist. Nach dieser Verzögerungszeit wird dann dem vom Block 21 kommenden Signal $P_{SPT}$ im Überlagerer 26 ein ansteigendes Signal aus dem Block 27 überlagert, durch das der Bremsdruck mit einer vorgegebenen Steigung ansteigt bis der Vorratsdruck erreicht wird (Verlauf 7b) oder bis ein ABS 24 anspricht und die Regelung des Drucks übernimmt (Verlauf 7c).

Die Steigung $\alpha$ wird so gewählt, daß die Räder nicht zu weit in die Blockierung geraten, daß andererseits jedoch nicht zu viel Zeit verloren geht.

Das ABS-Steuergerät ist in Figur 3 mit 24 bezeichnet. Daß das ABS die Steuerung übernimmt, ist durch das Öffnen eines Schalters 25 durch das ABS angedeutet.

Durch eine nicht gezeichnete Verbindung zwischen dem ABS-Block 24 und dem Überwachungsblock 23 könnte erreicht werden, daß der Überwachungsblock 23 nur bei Fahrzeugfahrt aktiviert ist, was bei Lastkraftwagen mit Druckluftbremsen den Luftverbrauch reduziert.

**Patentansprüche**

1.  Fahrzeugbremsanlage mit einer elektronischen Steuereinheit (2),

    - die einen vom Ausgangssignal eines Bremswertgebers (1) abhängigen Bremsdruck ($P_{STB}$) an den Bremsen durch elektrische Ansteuerung von den Bremsen zugeordneten, elektrisch betätigbaren Bremsdruckstellglieder (3) einsteuert oder einregelt,
    - die den einzusteuernden Bremsdruck ($P_{STB}$) zusätzlich von der Last (5) des Fahrzeugs abhängig macht, derart, daß der Bremsdruck in Abhängigkeit von der Last auf einen Teilbremsdruckwert ($P_{TB}$) begrenzt ist,
    - die bei Betätigen des Bremswertgebers (1) über ein vorgegebenes wenigstens näherungsweise bei der Maximalbetätigung liegendes Maß hinaus auf einen Sonderregelungsbetrieb umschaltet, in dem eine weitere Bremsdruckerhöhung über die Begrenzung hinaus erfolgt,

    dadurch gekennzeichnet, daß

    - die Steuereinheit (2) Mittel (23) umfaßt, die überprüfen, ob der Bremsdruckgeber (1) über das vorgegebene Maß hinaus betätigt ist, und die in diesem Fall auf den Sonderregelungsbetrieb umschalten,
    - die Steuereinheit (2) ferner Mittel (27) umfaßt, die im Sonderregelungsbetrieb ein ansteigendes Signal erzeugen, durch das der Bremsdruck mit einer vorgegebenen Steigung über die Bregrenzung hinaus erhöht wird.

2.  Fahrzeugbremsanlage nach Anspruch 1, dadurch gekennzeichnet, daß die weitere Bremsdruckerhöhung nach einer Wartezeit unter Beibehaltung des Teilbremsdruckwerts erfolgt.

3.  Fahrzeugbremsanlage nach Anspruch 1 oder 2, dadurch gekennzeichnet, daß bei Vorhandensein eines Antiblockierreglers dieser ab Erreichen des Blockierdrucks die weitere Bremsdruckregelung übernimmt.

4.  Fahrzeugbremsanlage nach einem der Ansprüche 1 bis 3, dadurch gekennzeichnet, daß die Umschaltung auf den Sonderregelungsbetrieb nur bei fahrendem Fahrzeug erfolgt.

**Claims**

1.  Vehicle brake system having an electronic control unit (2)

    - which applies a brake pressure ($P_{STB}$) which is dependent on the output signal of a brake value sensor (1) to the brakes under open-loop or closed-loop control by electrical activation of electrically actuable brake-pressure adjustment elements (3) assigned to the brakes,
    - which makes the brake pressure ($P_{STB}$) to be applied additionally dependent on the load (5) of the vehicle such that the brake pressure is limited to a partial brake pressure value ($P_{TB}$) as a function of the load,
    - which, when the brake value sensor (1) is actuated beyond a prescribed degree, which corresponds at least approximately to maximum actuation, switches over the system to a special control mode in which a further brake pressure increase beyond the limit takes place, characterized in that
    - the control unit (2) includes means (23) which check whether the brake pressure sensor (1) is actuated beyond the prescribed degree, and if this is the case switch over the system to the special control mode,
    - the control unit (2) furthermore includes means (27) which produce a rising signal in the special control mode, by means of which signal the brake pressure is increased with a prescribed gradient beyond the limit.

2.  Vehicle brake system according to Claim 1, characterized in that the further increase in brake pressure takes place after a waiting time while the partial brake pressure value is maintained.

3.  Vehicle brake system according to Claim 1 or 2, characterized in that if an anti-lock brake system is present, the said system assumes the further control of the brake pressure starting from the point at which the locking pressure is reached.

4.  Vehicle brake system according to one of Claims 1 to 3, characterized in that switching over to the special control mode only takes place when the vehicle is travelling.

**Revendications**

1.  Installation de freinage de véhicule avec une unité de commande électronique (2),

    - qui commande ou règle une pression de freinage ($P_{STB}$), fonction du signal de sortie d'un détecteur de la valeur de freinage (1) sur les freins par une commande électrique des organes de réglage (3) de la pression de freinage associés aux freins et qui peuvent être actionnés électriquement,
    - qui rend la pression de freinage ($P_{STB}$) à commander en plus dépendante de la charge (5) du véhicule, d'une manière telle que la pression de freinage soit limitée en fonction de la charge à une valeur de pression de freinage partiel ($P_{TB}$),

- qui lors de l'actionnement du détecteur de la valeur de freinage (1) commute, au-delà d'une mesure prédéfinie, qui se trouve au moins approximativement lors de l'actionnement maximal, sur un fonctionnement à régulation particulière, dans lequel a lieu une autre augmentation de la pression de freinage au-delà de la limitation, installation de freinage du véhicule,

caractérisée en ce que

- l'unité de commande (2) comprend des moyens (23) qui contrôlent, si le détecteur de la pression de freinage (1) est actionné au-delà de la mesure prédéfinie et qui provoquent dans ce cas la commutation sur le fonctionnement à régulation particulière,
- l'unité de commande (2) comprend en outre des moyens (27), qui en fonctionnement à régulation particulière produisent un signal croissant, grâce auquel la pression de freinage est augmentée avec une pente prédéfinie au-delà de la limitation.

2. Installation de freinage de véhicule selon la revendication 1,
caractérisée en ce que
la pression de freinage continue à augmenter après un temps d'attente en conservant la valeur de la pression du freinage partiel.

3. Installation de freinage de véhicule selon la revendication 1 ou 2,
caractérisée en ce que
quand il y a un système d'anti-blocage, celui-ci assume la poursuite de la régulation du freinage à partir du moment où est atteinte la pression de blocage.

4. Installation de freinage de véhicule selon l'une des revendications 1 à 3,
caractérisée en ce que
la commutation n'a lieu sur le fonctionnement à régulation particulière que quand le véhicule est en marche.

Fig.1

Fig 2

Fig 3